# EUROPEAN PATENT SPECIFICATION

(11) **EP 4 032 010 B1**
(45) Date of publication and mention of the grant of the patent: **04.03.2026**
(21) Application number: 20768241.0
(22) Date of filing: 17.09.2020
(51) Int. Cl.: G06F 18/28, G06V 20/52, G06V 40/16

(54) **APPARATUS AND METHOD FOR RECOGNISING FACIAL ORIENTATION**
VORRICHTUNG UND VERFAHREN ZUR ERKENNUNG DER GESICHTSORIENTIERUNG
APPAREIL ET PROCÉDÉ POUR RECONNAÎTRE L'ORIENTATION DU VISAGE

(30) Priority: 17.09.2019 IT 201900016505
(43) Date of publication of application: 27.07.2022
(73) Proprietor: Luce5 S.r.l., 52025 Montevarchi (AR) (IT)
(72) Inventor: BARTOLI, Federico, 50142 Firenze (IT); CASTELLI, Matteo, 52025 Montevarchi (AR) (IT); CETOLONI, Stefano, 52025 Montevarchi (AR) (IT)
(74) Representative: Fabbriciani, Simone
(86) International application number: PCT/IB2020/058657
(87) International publication number: WO 2021/053565

(56) References cited:
- WO-A1-2011/121484
- US-A1- 2011 141 011
- NOAH SNAVELY ET AL: "Modeling the World from Internet Photo Collections", INTERNATIONAL JOURNAL OF COMPUTER VISION, KLUWER ACADEMIC PUBLISHERS, BO, vol. 80, no. 2, 11 December 2007 (2007-12-11), pages 189 - 210, XP019616619, ISSN: 1573-1405

## Description

### Technical field

This invention relates to an apparatus and a method for recognising facial orientation with particular attention to its applications.

### Background art

In the commercial sector, and more specifically in the branch of statistics supporting neuromarketing, it is extremely important to study the likes and preferences of the consumer by observing the habits and behaviours of the user/observer in the place of interest.

The term "neuromarketing" means a discipline aimed at studying the purchasing decision-making processes.

For example, it is of fundamental importance for a dealer to know which types of products, such as the type of packaging (shape and colour) or which position of the products on the shelf attract most attention from possible buyers since this knowledge translates into a refining of the marketing strategies with which to increase the sales.

Moreover, it is of fundamental importance to be able to highlight certain products or other objects to be displayed so as to induce a user to stand in front of the article or encourage its purchase. For this purpose, there are prior art illumination means which illuminate the product in order to highlight the visual quality; however, these solutions are costly and not very energy efficient.

For example, if we think of a museum, the lighting costs of the structure represent a significant component on the balance sheet.

In fact, in addition to the lighting system with which the rooms are illuminated, there is typically a secondary lighting system acting on individual or numerically small groups of objects displayed.

The lighting system is therefore shown to be a significant cost for managing the museum. Moreover, this cost would be inconvenient if there were few visitors in the museum.

An example of prior art is given by the document WO 2011/121484 (A1).

In this context, the technical purpose which forms the basis of this invention is to provide an apparatus and a method for recognising facial orientation which overcomes at least some of the above-mentioned drawbacks of the prior art.

In particular, the aim of the invention is to provide an apparatus and a method for recognising facial orientation which is able to effectively support the study of the behaviour of the user for statistical-commercial purposes.

A further aim of the invention is to provide an apparatus and a method for recognising facial orientation which is able to improve the energy consumption efficiency in the display and home automation sector.

### Disclosure of the invention

The invention is set out in the independent claims.

The technical purpose indicated and the aims specified are substantially achieved by an apparatus for recognising facial orientation comprising a storage unit, at least one optical instrument and a control unit.

The activity of the storage unit is that of recording a plurality of predetermined positions of interest belonging to an exposure surface. The term "storage unit" is used to mean any prior art logic or data processing unit, not necessarily a storage archive, in any case connected to the apparatus.

In particular, the storage unit is configured for recording a geometrical model of an area of interest in which the exposure surface is located.

The optical facial recognition instrument is configured for acquiring data relating to a face of at least one observer.

The control unit is connected to the storage unit and to the at least one optical instrument with the aim of estimating a pose vector and identifying when the latter is stationary in the positions of interest.

The control unit is configured to define a database in which to store information of interest relating to the pose vector and to the specific position of interest.

Moreover, the information of interest comprises an initial positioning of said pose vector in the geometrical model and an observation path performed by the pose vector relative to the positions of interest in the geometrical model.

The invention also relates to a method for recognising facial orientation comprising the steps of:
- recording a plurality of predetermined positions of interest belonging to an exposure surface by means of a storage unit, that is configured for recording a geometrical model of an area of interest in which the exposure surface is located;
- acquiring data relating to a face of at least one observer;
- processing the acquired data for estimating at least one pose vector representing an orientation of a facial plane of the observer relative to the exposure surface, in order to define a database in which to store information of interest relating to the pose vector and to the specific position of interest (5);
- identifying when said pose vector is stationary in a specific position of interest, wherein the information of interest comprises an initial positioning of the pose vector in said geometrical model and an observation path performed by the pose vector relative to the positions of interest in the geometrical model.

In particular, the dependent claims correspond to possible embodiments of the invention.

Further features and advantages of the invention are more apparent in the non-limiting description which follows of a preferred, non-limiting embodiment of an apparatus and a method for recognising facial orientation.

### Description of the drawings

The description is set out below with reference to the accompanying drawings which are provided solely for purposes of illustration without restricting the scope of the invention and in which:
- Figure 1 shows a schematic perspective view of an apparatus for recognising facial orientation in an exposure environment according to the invention;
- Figure 2 shows a schematic view of a face for which a facial plane and a pose vector according to the invention have been traced.

### Detailed description of the invention

With reference to the accompanying drawings, the numeral 1 denotes in its entirety an apparatus for recognising facial orientation.

Substantially, the apparatus 1 comprises a storage unit 2, at least one optical instrument 3 and a control unit 4.

In particular, the storage unit is configured for recording a plurality of predetermined positions of interest 5 belonging to an exposure surface 6. The term "exposure surface" 6 is used to mean any architectural or furnishing element which can be used as support for products or for visual representations (such as, for example, paintings or sculptures and the like) to be placed in view, and therefore displayed, to the public.

The expression "positions of interest" 5 means, on the other hand, specific and predetermined points of the exposure surface 6, which are typically combined with at least one object or with at least one visual representation which will be observed by the public.

In other words, the positions of interest 5 correspond to a mapping of the exposure surface 6 which may be more or less dense as a function of the number of positions of interest 5 recorded, that is, the number of products displayed.

The number of positions of interest will depend on the arrangement of the objects or visual representations displayed and on the precision to be obtained from the apparatus 1 according to the invention.

By way of an example, the exposure surface 6 may represent the shelving of a supermarket and the positions of interest 5 may correspond to the compartments in which certain products are housed.

Another example may be the wall of a museum on which paintings are positioned.

A further example may be that of a series of lighting points at the sides of a corridor which switch on (or increase in luminosity) one after another, as a user moves along the corridor in a direction of its extension.

Further examples may be represented by shop windows, by the walls of a room inside an art gallery, by the displays of an exhibition or by a display cabinet in a living room.

Preferably, the storage unit 2 is configured for recording a geometrical model of an area of interest in which the exposure surface 6 is located. The geometrical model may, for example, correspond to a three-dimensional mapping of the exposure surface 6 which may be more or less dense depending on the number of positions of interest 5 recorded, that is, the number of products displayed.

The optical facial recognition instrument 3 is configured for acquiring data relating to a face 7 of at least one observer 8, where the data are typically sequences of photographs captured by the optical instrument 3.

In particular, the optical instrument 3, preferably a digital recording video camera, is oriented towards a stationary area 9 of the observer 8.

The term "stationary area" 9 means a zone, close to the exposure surface 6, wherein the at least one observer 8 may walk. For example, the stationary area 9 may represent the aisle of a supermarket, the inside room of an art gallery or a museum or the portion of road close to the shop window.

More specifically, the optical instrument 3 is oriented in such a way as to capture in its angle of vision "A" the face 7 of the observer 8.

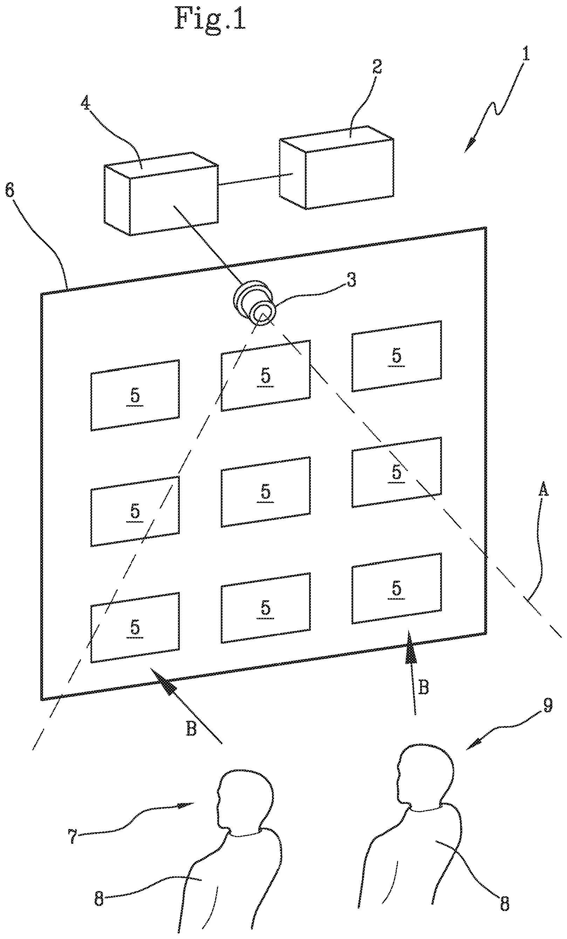

In other words, the optical instrument 3 is preferably positioned in a portion of the exposure surface 6 which allows it to have an angle of vision "A" designed to view the entire stationary area 9. The optical instrument 3 may be positioned in a central and upper portion of the exposure surface 6, as shown for example in Figure 1.

Preferably, the optical instrument 3 is oriented in such a way as to display a front portion to the observer 8 who is looking in the direction of the positions of interest 5.

According to further embodiments (not shown in the drawing) the apparatus for recognising the facial orientation comprises a plurality of optical instruments 3.

In fact, if the exposure surface 6 is extensive, the presence of a single optical instrument 3 does not allow the scene to be captured in its entirety. Advantageously, the installation of a greater number of optical instruments 3 allows the capturing of a larger or more complex scene. In the case, for example, that the exposure surface 6 is a table surrounded by several observers 8 it will be necessary to place in the room or close to the table a sufficient number of optical instruments 3 which are able to capture the faces of all the observers 8 positioned around the table. Moreover, the greater the number of optical instruments 3 the greater will be the image acquisition precision.

The control unit 4 is connected to the optical instrument 3 from which it receives the data acquired. The control unit 4 is configured for processing the data with the aim of estimating a pose vector "B" representing an orientation of a facial plane "C" of the respective observer 8 relative to the exposure surface 6.

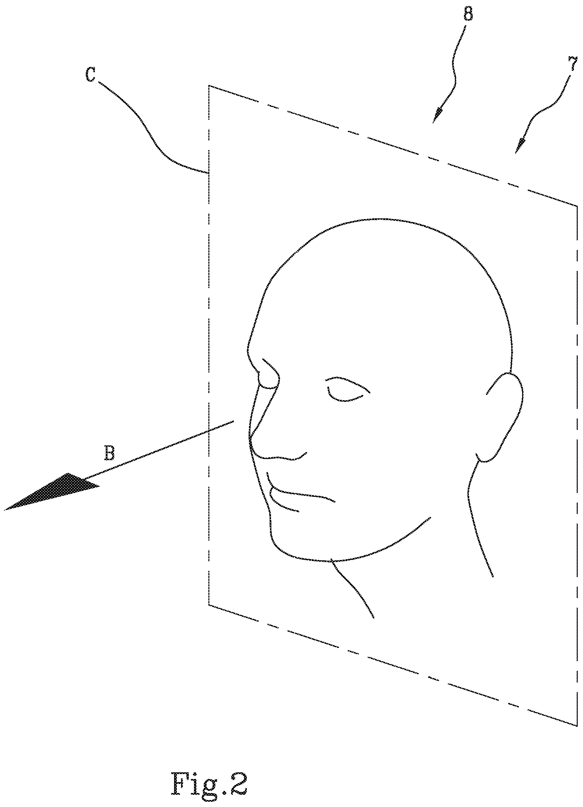

In other words, the control unit 4, analysing the sequence of photographs provided by the optical instrument 3, detects and locates the observer 8, and specifically its face 7. By extracting suitable salient points of the face 7, the control unit estimates the facial plane "C" and the pose vector "B" which represents the direction in which the face 7 is oriented, as shown for example in Figure 2.

Moreover, the control unit 4 is connected to the storage unit 2 for identifying when the pose vector "B" is stationary in a specific position of interest 5.

In other words, the control unit 4, using the data provided by the storage unit 2, is able to identify how the pose vector "B" of the observer 8 moves inside the three-dimensional model of the exposure surface 6 and therefore which respective points of interest 5 are being observed by the observer 8.

In this way, the control unit 4 recognises when the pose vector "B" of an observer 8 intersects/passes through a respective position of interest 5.

Moreover, the control unit 4 is configured for processing a plurality of pose vectors "B" each associated with as many respective observers 8 and identifying when each pose vector "B" is stationary in specific positions of interest 5. In other words, the control unit 4 is able to process the pose vectors "B" of each observer 8 and to identify for each vector "B" the moment it intersects/is stationary at the respective point of interest 5 (or several points of interest 5).

Advantageously, this solution allows a shopkeeper to know which products are the most observed by the observers 8 (that is to say, which products attract most attention by the observers 8) and therefore to improve the arrangement of these products on the exposure surface.

According to an embodiment, the control unit 4 is also configured to define a database, preferably using the storage unit 2, in which to store information of interest relating to the pose vector "B" and to the specific position of interest 5.

For example, the control unit 4 records an interval of time in which the respective pose vector "B" is stationary in a specific position of interest 5.

In other words, the control unit 4, each time the pose vector "B" intersects a predetermined position of interest 5, takes into account the time the pose vector "B" is stationary on it. In this way, a specific position of interest 5 is associated with a time interval characteristic of a specific pose vector "B" of a respective observer 8.

If there are a plurality of pose vectors "B", associated with respective observers 8, the control unit 4 records when each pose vector "B" is stationary on the respective positions of interest 5.

Advantageously, the apparatus 1 may accumulate information relative to each of the positions of interest 5 and, consequently, to the objects, products or graphical representations allocated thereto.

For example, the dealer can in this way use the data obtained to understand which products are most desired by the customers or which draw most attention.

Moreover, the manager of an exhibition or a museum may use this data to understand which items are actually the most observed and therefore better place these items inside the museum.

The control unit 4 may also take into account the number of times the respective pose vector "B" is stationary in a specific position of interest 5. In other words, the information of interest may relate to the number of times a product has been observed in order to understand how many times a single observer 8 and/or a plurality of observers 8 have been attracted by the product in question.

Using the geometrical model of the area of interest, the data acquired by the at least one optical instrument 3 and processed by the control unit 4 may also comprise an initial positioning of the pose vector "B" relative to the geometrical model and an observation path of the pose vector "B" relative to the positions of interest 5. In other words, the control unit 4 is able to process from where the observer 8 has arrived and, for example, to record the path followed by the pose vector "B" by the observer 8 on the exposure surface 6.

Advantageously, thanks to the data referred to the initial positioning of the pose vector "B", a dealer can understand which product has immediately attracted interest in the observer and estimate, for example, which is the ideal product or packaging to attract the possible interest.

That is to say, with the same packaging, the dealer can estimate the ideal position of a product placed on a shelf.

Moreover, advantageously, the knowledge of the path followed by the observer 8 inside the stationary area 9 (and in particular the path of the pose vector "B" inside the geometrical model) provides useful suggestions to the dealer (or to the manager of an exhibition or a museum) for correctly managing the display environment.

According to another embodiment not illustrated in the drawings, the apparatus 1 for recognising the facial orientation comprises a lighting system equipped with at least one light source.

The control unit 4 is configured for activating the light source or for adjusting the intensity and/or the position, when the pose vector "B" is stationary in the specific position of interest 5.

In other words, the stationary state of the vector "B" in the position of interest 5 is used by the control unit 4 as an input for the adjustment of the lighting system. The control unit 4, operating in real time, adjusts the at least one light source as a function of the orientation of the pose vector "B".

The lighting system may also comprise a plurality of light sources associated with respective positions of interest 5.

For example, if a visitor is observing a display in which a plurality of objects are positioned, each illuminated by a respective light source, the apparatus 1 is able to increase the light intensity of the light source acting on the position of interest 5 in which the pose vector "B" of the observer 8 is stationary, keeping the light intensity of the other light sources with low power.

Preferably, after the pose vector "B" is no longer stationary in the position of interest 5, the control unit 4 has a "buffering" period of time in which the intensity of the light source associated with it remains increased.

A further example may be a display cabinet located inside a home, where each compartment is illuminated by a respective light source. Advantageously, in this way, the electricity consumption for the lighting is controlled in a more efficient manner and consequently reduced.

The invention achieves the preset aims by overcoming the drawbacks of the prior art and providing an apparatus for recognising facial orientation which is able to provide data for effectively supporting the study of the behaviour of the user positioned directly in front of the situation of interest. In fact, advantageously, the data which can be obtained by using the apparatus for recognising facial orientation provides information linked to the most instinctive habits and behaviours of the users recorded and is therefore very useful for the purposes of statistical-marketing studies.

Another aim is to provide an apparatus for recognising facial orientation which is able to render more efficient the management costs of a room, in particular the lighting costs.

In fact, advantageously, the apparatus for recognising facial orientation is able to adjust the lighting system as a function of the actual requirements of the user, operating the lighting system at minimum power as necessary and in this way safeguarding the energy consumption. Moreover, the adjustment of the lighting system makes it possible to draw more attention of a user relative to a specific product.

This invention also relates to a method for recognising facial orientation preferably which can be performed by means of an apparatus 1 as described above.

In particular, the method comprises a first step of recording a plurality of predetermined positions of interest 5 belonging to an exposure surface 6. Data relating to a face 7 of at least one observer 8 is then acquired.

During this step, the optical instrument 3 captures photos of the scene towards which it is oriented. In particular, the optical instrument 3 photographs the stationary area 9 in which the observers 8 are present. Once acquired, the data is sent to the control unit 4 which processes it for estimating at least one pose vector "B" representing an orientation of a facial plane "C" of the observer 8 relative to the exposure surface 5.

By means of the data processing, the control unit 4 is able to identify when the pose vector "B" is stationary in a specific position of interest 5.

According to an embodiment, the method comprises a step wherein the control unit 4 adjusts an intensity and/or the position of a light source, included in a lighting system of the apparatus 1, when the pose vector "B" is stationary in the specific position of interest 5 on which the light source is active.

In other words, when the pose vector "B" is in a position of interest 5, the control unit 4 increases the light intensity of the light source associated with it keeping the light intensity of the other light sources with reduced power.

Preferably, after the pose vector "B" is no longer stationary in the position of interest 5, the method comprises a "buffering" period of time in which the intensity of the light source associated with it remains increased.

Advantageously, the method described above overcomes the drawbacks of the prior art allowing the acquisition of data useful for statistical-marketing studies aimed at understanding the behaviour and the likes of the user. In particular, this aim is achieved by a thorough observation on the spot of the users from which the objects observed are extrapolated.

The method described overcomes the drawbacks of the prior art allowing an efficient management of the electricity consumption linked to the lighting of display or household spaces.

More specifically, this aim is achieved by an adjustment in real time of the light sources as a function of the objects observed by the user.

## Claims

1. An apparatus (1) for recognising facial orientation, comprising:
- a storage unit (2) designed to record a plurality of predetermined positions of interest (5) located on an exposure surface (6);
- at least one optical facial recognition instrument (3) configured for acquiring data relating to a face (7) of at least one observer (8); said optical instrument (3) being oriented towards the observer (8);
- a control unit (4) connected to said optical instrument (3), for receiving said acquired data for estimating, by processing said acquired data, at least one pose vector (B) representing an orientation of a facial plane (C) of said at least one observer (8) relative to said exposure surface (6), said control unit (4) also being connected to said storage unit (2) for identifying when said pose vector (B) is stationary in a specific position of interest (5) which corresponds to a location on the exposure surface;
**characterized in that** the control unit (4) is configured to define a database in which to store information of interest relating to the pose vector (B) and to the specific position of interest (5); and
the information of interest comprises a number of times in which the pose vector (B) is stationary in a specific position of said positions of interest (5); wherein the geometric model is a three-dimensional mapping of the exposure surface (6).

2. The apparatus (1) according to claim 1, wherein said control unit (4) is configured for processing a plurality of pose vectors (B) each associated with as many, as pose vectors, respective observers (8) and identifying when each pose vector (B) is stationary in specific positions of interest (5).

3. The apparatus (1) according to any one of the preceding claims, wherein said storage unit (2) is configured for recording a geometrical model of an area of interest in which said exposure surface (6) is located.

4. The apparatus (1) according to claim 3, wherein said information of interest comprises an initial positioning of said pose vector (B) in said geometrical model and an observation path performed by said pose vector (B) relative to said positions of interest (5) in said geometrical model.

5. The apparatus (1) according to any of claims 1 to 4, also comprising a lighting system equipped with at least one light source, said control unit (4) being configured for adjusting an intensity and/or a position of said light source when the pose vector (B) is stationary in said specific position of interest (5).

6. The apparatus (1) according to claim 5, wherein said lighting system comprises a plurality of light sources associated with respective positions of interest (5).

7. A method for recognising facial orientation, in an apparatus (1) according to any of claims 1 to 6, comprising the steps of:
- recording a plurality of predetermined positions of interest (5) belonging to an exposure surface (6);
- acquiring data relating to a face (7) of at least one observer (8);
- processing said acquired data for estimating at least one pose vector (B) representing an orientation of a facial plane (C) of the observer (8) relative to the exposure surface (6);
- identifying when said pose vector (B) is stationary in a specific position of interest (5).

8. The method according to claim 7, also comprising the step of adjusting an intensity and/or a position of the light source when the pose vector (B) is stationary in the specific position of interest (5).

9. The method according to claim 7, also comprising the step of activating a light source when the pose vector (B) is stationary in the specific position of interest (5).

## Patentansprüche

1. Vorrichtung (1) zur Erkennung der Gesichtsorientierung, umfassend:
- eine Speichereinheit (2), die ausgestaltet ist, um eine Vielzahl von vorbestimmten Positionen von Interesse (5), die auf einer Belichtungsoberfläche (6) befindlich sind, aufzuzeichnen;
- mindestens ein optisches Gesichtserkennungsinstrument (3), das ausgelegt ist, um sich auf ein Gesicht (7) von mindestens einem Beobachter (8) beziehende Daten zu erfassen, wobei das optische Instrument (3) zu dem Beobachter (8) hin orientiert ist;
- eine Steuereinheit (4), die mit dem optischen Instrument (3) verbunden ist, um die erfassten Daten zu empfangen, um durch Verarbeiten der erfassten Daten mindestens einen Posenvektor (B) zu schätzen, der eine Orientierung einer Gesichtsebene (C) des mindestens einen Beobachters (8) relativ zur Belichtungsoberfläche (6) darstellt, wobei die Steuereinheit (4) auch mit der Speichereinheit (2) verbunden ist, um zu identifizieren, wann der Posenvektor (B) in einer spezifischen Position von Interesse (5), die einer Lage auf der Belichtungsoberfläche entspricht, stationär ist,
**dadurch gekennzeichnet, dass**
die Steuereinheit (4) ausgelegt ist, um eine Datenbank zu definieren, in der Informationen von Interesse in Bezug auf den Posenvektor (B) und die spezifische Position von Interesse (5) zu speichern sind, und
die Informationen von Interesse eine Anzahl von Malen umfassen, in denen der Posenvektor (B) in einer spezifischen Position der Positionen von Interesse (5) stationär ist,
wobei
das geometrische Modell eine dreidimensionale Abbildung der Belichtungsoberfläche (6) ist.

2. Vorrichtung (1) nach Anspruch 1, wobei die Steuereinheit (4) ausgelegt ist, um eine Vielzahl von Posenvektoren (B) zu verarbeiten, die jeweils mit einer Anzahl von jeweiligen Beobachtern (8), die der der Posenvektoren entspricht, assoziiert sind, und um zu identifizieren, wann ein jeder Posenvektor (B) in spezifischen Positionen von Interesse (5) stationär ist.

3. Vorrichtung (1) nach einem der vorhergehenden Ansprüche, wobei die Speichereinheit (2) ausgelegt ist, um ein geometrisches Modell eines Bereichs von Interesse, in dem die Belichtungsoberfläche (6) befindlich ist, aufzuzeichnen.

4. Vorrichtung (1) nach Anspruch 3, wobei die Informationen von Interesse eine anfängliche Positionierung des Posenvektors (B) in dem geometrischen Modell und einen Beobachtungspfad, der von dem Posenvektor (B) relativ zu den Positionen von Interesse (5) in dem geometrischen Modell zurückgelegt wird, umfassen.

5. Vorrichtung (1) nach einem der Ansprüche 1 bis 4, zudem umfassend ein Beleuchtungssystem, das mit mindestens einer Lichtquelle ausgestattet ist, wobei die Steuereinheit (4) ausgelegt ist, um eine Intensität und/oder eine Position der Lichtquelle zu regeln, wenn der Posenvektor (B) in der spezifischen Position von Interesse (5) stationär ist.

6. Vorrichtung (1) nach Anspruch 5, wobei das Beleuchtungssystem eine Vielzahl von Lichtquellen umfasst, die mit jeweiligen Positionen von Interesse (5) assoziiert sind.

7. Verfahren zur Erkennung der Gesichtsorientierung in einer Vorrichtung (1) nach einem der Ansprüche 1 bis 6, umfassend die folgenden Schritte:
- Aufzeichnen einer Vielzahl von vorbestimmten Positionen von Interesse (5), die zu einer Belichtungsoberfläche (6) gehören;
- Erfassen von Daten, die sich auf ein Gesicht (7) von mindestens einem Beobachter (8) beziehen;
- Verarbeiten der erfassten Daten, um mindestens einen Posenvektor (B) zu schätzen, der eine Orientierung einer Gesichtsebene (C) des Beobachters (8) relativ zur Belichtungsoberfläche (6) darstellt;
- Identifizieren, wann der Posenvektor (B) in einer spezifischen Position von Interesse (5) stationär ist.

8. Verfahren nach Anspruch 7, zudem umfassend den Schritt zum Regeln einer Intensität und/oder einer Position der Lichtquelle, wenn der Posenvektor (B) in der spezifischen Position von Interesse (5) stationär ist.

9. Verfahren nach Anspruch 7, zudem umfassend den Schritt zum Aktivieren einer Lichtquelle, wenn der Posenvektor (B) in der spezifischen Position von Interesse (5) stationär ist.

## Revendications

1. Appareil (1) pour reconnaître l'orientation du visage, comprenant :
- une unité de stockage (2) conçue pour enregistrer une pluralité de positions d'intérêt prédéterminées (5) situées sur une surface d'exposition (6) :
- au moins un instrument de reconnaissance faciale optique (3) configuré pour acquérir des données relatives à un visage (7) d'au moins un observateur (8) ; ledit instrument optique (3) étant orienté vers l'observateur (8) ;
- une unité de commande (4) connectée audit instrument optique (3), pour recevoir lesdites données acquises pour estimer, par traitement desdites données acquises, au moins un vecteur de pose (B) représentant une orientation d'un plan facial (C) dudit au moins un observateur (8) par rapport à ladite surface d'exposition (6), ladite unité de commande (4) étant également connectée à ladite unité de stockage (2) pour identifier quand ledit vecteur de pose (B) est stationnaire dans une position d'intérêt spécifique (5) qui correspond à un emplacement sur la surface d'exposition ;
**caractérisé en ce que**
l'unité de commande (4) est configurée pour définir une base de données dans laquelle stocker des informations d'intérêt relatives au vecteur de pose (B) et à la position d'intérêt spécifique (5) ; et
les informations d'intérêt comprennent un certain nombre de fois où le vecteur de pose (B) est stationnaire dans une position spécifique desdites positions d'intérêt (5) ;
dans lequel
le modèle géométrique est une cartographie tridimensionnelle de la surface d'exposition (6).

2. Appareil (1) selon la revendication 1, dans lequel ladite unité de commande (4) est configurée pour traiter une pluralité de vecteurs de pose (B) associés chacun à autant d'observateurs respectifs (8) qu'il y a de vecteurs de pose et pour identifier quand chaque vecteur de pose (B) est stationnaire dans des positions d'intérêt spécifiques (5).

3. Appareil (1) selon l'une quelconque des revendications précédentes, dans lequel ladite unité de stockage (2) est configurée pour enregistrer un modèle géométrique d'une zone d'intérêt dans laquelle ladite surface d'exposition (6) est située.

4. Appareil (1) selon la revendication 3, dans lequel lesdites informations d'intérêt comprennent un positionnement initial dudit vecteur de pose (B) dans ledit modèle géométrique et un trajet d'observation effectué par ledit vecteur de pose (B) par rapport auxdites positions d'intérêt (5) dans ledit modèle géométrique.

5. Appareil (1) selon l'une quelconque des revendications 1 à 4, comprenant également un système d'éclairage équipé d'au moins une source lumineuse, ladite unité de commande (4) étant configurée pour ajuster une intensité et/ou une position de ladite source lumineuse lorsque le vecteur de pose (B) est stationnaire dans ladite position d'intérêt spécifique (5).

6. Appareil (1) selon la revendication 5, dans lequel ledit système d'éclairage comprend une pluralité de sources lumineuses associées à des positions d'intérêt respectives (5).

7. Procédé pour reconnaître l'orientation du visage, dans un appareil (1) selon l'une quelconque des revendications 1 à 6, comprenant les étapes de :
- enregistrer une pluralité de positions d'intérêt prédéterminées (5) appartenant à une surface d'exposition (6) ;
- acquérir des données relatives à un visage (7) d'au moins un observateur (8) ;
- traiter lesdites données acquises pour estimer au moins un vecteur de pose (B) représentant une orientation d'un plan facial (C) de l'observateur (8) par rapport à la surface d'exposition (6) ;
- identifier quand ledit vecteur de pose (B) est stationnaire dans une position d'intérêt spécifique (5).

8. Procédé selon la revendication 7, comprenant également l'étape consistant à ajuster une intensité et/ou une position de la source lumineuse lorsque le vecteur de pose (B) est stationnaire dans la position d'intérêt spécifique (5).

9. Procédé selon la revendication 7, comprenant également l'étape consistant à activer une source lumineuse lorsque le vecteur de pose (B) est stationnaire dans la position d'intérêt spécifique (5).
